# EUROPEAN PATENT APPLICATION

(11) **EP 4 679 294 A1**
(43) Date of publication of application: **14.01.2026**
(21) Application number: 24778031.5
(22) Date of filing: 26.03.2024
(51) Int. Cl.: G06F 16/9535, G06N 3/0464, G06N 3/08

(54) **DATA PROCESSING METHOD AND APPARATUS**

(30) Priority: 27.03.2023 CN 202310347445
(71) Applicant: Huawei Technologies Co., Ltd., Shenzhen, Guangdong 518129 (CN)
(72) Inventor: GUO, Wei, Shenzhen, Guangdong 518129 (CN); LIU, Weiwen, Shenzhen, Guangdong 518129 (CN); GUO, Huifeng, Shenzhen, Guangdong 518129 (CN); TANG, Ruiming, Shenzhen, Guangdong 518129 (CN)
(74) Representative: Pfenning, Meinig & Partner mbB
(86) International application number: PCT/CN2024/083915
(87) International publication number: WO 2024/199243

(57) **Abstract**

A data processing method and apparatus, a computer-readable storage medium, a chip, and a computer program product are provided. The method includes: determining a domain feature in a plurality of features based on distribution of each of the plurality of features of to-be-processed data; obtaining a plurality of corresponding converted representations by separately inputting a plurality of eigenvectors corresponding to the plurality of features to a dynamic network, where a dynamic network parameter of the dynamic network is obtained based on the domain feature; and obtaining a network output by inputting the plurality of converted features to a feature interaction network.

## Description

### TECHNICAL FIELD

This disclosure relates to the field of computers, and more specifically, to a data processing method and apparatus, a computer-readable storage medium, a chip, and a computer program product.

### BACKGROUND

Personalized recommendation systems play important roles in various online service platforms such as online advertising, retail, music and video recommendation. The personalized recommendation system is intended to recommend or provide accurate and customized services for users. For example, recommendation may be performed based on prediction of a click-through rate (click-through rate, CTR) and/or a conversion rate (conversion rate, CVR).

The CTR is used as an example. A neural network model used for CTR prediction may be constructed based on machine learning and deep learning. CTR prediction is related to a plurality of different business domains or a plurality of scenarios, and different domains or scenarios have some commonalities. Therefore, when both a feature of a domain and a commonality between different domains are considered, how to construct a neural network model for personalized recommendation is one of problems that need to be resolved currently.

### SUMMARY

Example embodiments of this disclosure provide a data processing solution in which an interaction feature between different domains is considered, to achieve good prediction performance.

According to a first aspect, a data processing method is provided. The method includes: determining a domain feature in a plurality of features based on distribution of each of the plurality of features of to-be-processed data; obtaining a plurality of corresponding converted representations by separately inputting a plurality of eigenvectors corresponding to the plurality of features to a dynamic network, where a dynamic network parameter of the dynamic network is obtained based on the domain feature; and obtaining a network output by inputting the plurality of converted features to a feature interaction network.

It can be learned that, in this embodiment of this disclosure, the dynamic network parameter can be determined based on the domain feature, and the plurality of converted features output by the dynamic network are then input to the feature interaction network. In this way, feature interaction between different domains can be considered in combination with commonalities and characteristics of a plurality of domains corresponding to the plurality of features, so that the network output is accurate.

In some implementations of the first aspect, the determining a domain feature in a plurality of features includes: determining a cross entropy of each feature based on the distribution of each feature; and selecting, from the plurality of features, a predetermined quantity of features with a largest cross entropy as the domain feature. In this manner, the predetermined quantity of features with the large cross entropy are used as the domain feature, so that a feature with a large distribution difference can be selected from the plurality of features as the domain feature, so that different distribution in data can be distinguished.

In some implementations of the first aspect, the method further includes encoding the domain feature into a middle-layer representation, and decoding the middle-layer representation into the dynamic network parameter. In this manner, the domain feature may be encoded into the middle-layer representation to be used as a domain adaptation parameter, and then the middle-layer representation is decoded into the dynamic network parameter, so that a difference between different domains can be reflected, and a relationship between the domains can be determined.

In some implementations of the first aspect, the decoding the middle-layer representation into the dynamic network parameter includes: decomposing the middle-layer representation into a plurality of layers, to obtain the dynamic network parameter. In some implementations of the first aspect, the middle-layer representation is represented as a vector having a predetermined dimension.

In some implementations of the first aspect, a model structure of the feature interaction network is an inner product-based model structure. In this way, an original embedded feature can be input to the dynamic network.

In some implementations of the first aspect, a model structure of the feature interaction network is a transformer-based automatic interaction model structure, and the plurality of eigenvectors input to the dynamic network include eigenvectors output by a query branch and a key branch of the automatic interaction model structure. In this manner, outputs of the query branch and the key branch may be input to the dynamic network for subsequent attention coefficient calculation of feature interaction.

In some implementations of the first aspect, the network output indicates a click-through rate of a user corresponding to the to-be-processed data.

In some implementations of the first aspect, the method is implemented by using a neural network model used for click-through rate prediction, and the neural network model includes a feature selection layer, the dynamic network, and the feature interaction network.

According to a second aspect, a data processing apparatus is provided, including: a domain feature determining unit, configured to determine a domain feature in a plurality of features based on distribution of each of the plurality of features of to-be-processed data; a converted feature determining unit, configured to obtain a plurality of corresponding converted representations by separately inputting a plurality of eigenvectors corresponding to the plurality of features to a dynamic network, where a dynamic network parameter of the dynamic network is obtained based on the domain feature; and a feature interaction unit, configured to obtain a network output by inputting the plurality of converted features to a feature interaction network.

In some implementations of the second aspect, the domain feature determining unit is specifically configured to: determine a cross entropy of each feature based on the distribution of each feature; and select, from the plurality of features, a predetermined quantity of features with a largest cross entropy as the domain feature.

In some implementations of the second aspect, the apparatus further includes an encoding unit, configured to encode the domain feature into a middle-layer representation; and a decoding unit, configured to decode the middle-layer representation into the dynamic network parameter.

In some implementations of the second aspect, the decoding unit is specifically configured to decompose the middle-layer representation into a plurality of layers, to obtain the dynamic network parameter.

In some implementations of the second aspect, the middle-layer representation is represented as a vector having a predetermined dimension.

In some implementations of the second aspect, a model structure of the feature interaction network is an inner product-based model structure.

In some implementations of the second aspect, a model structure of the feature interaction network is a transformer-based automatic interaction model structure, and the plurality of eigenvectors input to the dynamic network include eigenvectors output by a query branch and a key branch of the automatic interaction model structure.

In some implementations of the second aspect, the network output indicates a click-through rate of a user corresponding to the to-be-processed data.

In some implementations of the second aspect, a neural network model used for click-through rate prediction is installed on the apparatus, and the neural network model includes a feature selection layer, the dynamic network, and the feature interaction network.

According to a third aspect, a computing device is provided, including a processor and a memory. The memory stores instructions executed by the processor, and when the instructions are executed by the processor, the computing device is enabled to implement an operation of the method in the first aspect or any one of the implementations of the first aspect.

According to a fourth aspect, a computing device cluster is provided, including at least one computing device. Each of the at least one computing device includes a processor and a memory. The processor of the at least one computing device is configured to execute instructions stored in the memory of the at least one computing device, so that the computing device cluster is enabled to implement an operation of the method in the first aspect or any one of the implementations of the first aspect.

According to a fifth aspect, a computer-readable storage medium is provided. The computer-readable storage medium stores a computer program, and when the computer program is executed by a processor, an operation of the method in the first aspect or any one of the implementations of the first aspect is implemented.

According to a sixth aspect, a chip or a chip system is provided. The chip or the chip system includes a processing circuit, configured to perform an operation of the method in the first aspect or any one of the implementations of the first aspect.

According to a seventh aspect, a computer program or a computer program product is provided. The computer program or the computer program product is tangibly stored on a computer-readable medium and includes computer-executable instructions. When the computer-executable instructions are executed, a device is enabled to implement an operation of the method in the first aspect or any one of the implementations of the first aspect.

### BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, same or similar reference numerals indicate same or similar elements.
FIG. 1 is a block diagram of a neural network model according to some embodiments of this disclosure;
FIG. 2 is a diagram of a model structure according to some embodiments of this disclosure;
FIG. 3 is a flowchart of an example method according to some embodiments of this disclosure;
FIG. 4 is a block diagram of an example apparatus according to some embodiments of this disclosure;
FIG. 5 is a block diagram of an example device that may be used to implement an embodiment of this disclosure; and
FIG. 6 is a block diagram of an example computing device cluster that may be used to implement an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As mentioned above, accurate CTR prediction plays a key role in providing accurate and customized recommendation services for users. For example, the CTR prediction may determine a click-through rate of the user for a given item. To maximize the click-through rate of the user, a recommendation system sorts items based on predicted CTRs.

Some existing CTR prediction models focus on single-domain prediction. Samples of a domain may be collected and used to train the CTR prediction model to serve the single domain. For example, the domain may be a service domain, and the service domain usually corresponds to a specific scenario. For example, in an application market on a mobile terminal, a plurality of applications (Application, APP) may be categorized and displayed; on a website or a product display page of a specific app, items can be sorted and displayed; and on a specific page, a plurality of messages (such as top search) are displayed. In each scenario, user satisfaction needs to be improved based on the CTR prediction. In addition, log data collected from the recommendation system may be divided into a plurality of subsets, for example, may be divided based on features such as gender, country, and the like. Different subsets may be referred to as different domains, and generally have different CTR distribution.

In one aspect, there are some commonalities (such as common users, items, and features) between different domains, and sharing of commonality information between domains can facilitate CTR prediction for different domains. In another aspect, a user exposure probability and the like may vary greatly in different domains. Therefore, it is important to model commonalities and differences between domains when CTR prediction is performed.

Some existing solutions have been proposed to resolve a multi-domain CTR prediction problem. These solutions can be divided into two categories. In a first type of solution, a deep & cross network (Deep & Cross Network, DCN), a product-based neural network (Product-based Neural Network, PNN), or the like mixes data or trains a separate model for each domain. However, because data distribution of different domains is different, a model obtained through training by directly mixing data of all domains cannot have good performance in all domains. However, if a separate model is trained for each domain, because some domains have only a small amount of training data, the model obtained through learning has insufficient precision, and maintenance of a plurality of models causes huge resource consumption and labor costs. In a second type of solution, multi-task learning is used to resolve a multi-domain problem, and a plurality of domains correspond to a plurality of tasks. For example, in a STAR model, a parameter sharing mode is used, a shared network is maintained for all domains, and an independent network is maintained for each domain, to learn commonalities and characteristics of a plurality of domains at the same time. For example, in a progressive layered extraction (Progressive Layered Extraction, PLE) model, shared experts and unique experts are learned for each task, to achieve adaptive modeling of a plurality of domains through dynamic combinations of the experts. However, because a tower of multi-task learning is generally a deep neural network (Deep Neural Network, DNN) structure, it is difficult to learn complex feature interaction. Even if the DNN is upgraded to a complex structure like a PNN or a DCN, because a tower of a specific domain uses only data in the domain for training, it is difficult to learn a good representation for feature interaction due to a lack of data.

In view of this, embodiments of this disclosure provides a neural network model for a multi-domain recommendation system. According to the model, an interaction feature between a plurality of domain features may be determined based on a feature interaction network. Because feature interaction learning plays an important role in tasks such as CTR prediction, effective modeling of interaction features can provide a network expression capability and implement good prediction performance.

In embodiments of this disclosure, the CTR prediction may also be referred to as CTR estimation, CTR evaluation, CTR determining, or the like. It may be understood that a CTR is used as an example for description in embodiments of this disclosure. However, it may be understood that in an actual scenario, an output of a model may include another prediction indicator, for example, a CVR, or another indicator obtained based on the CTR and/or the CVR. This is not limited in this disclosure.

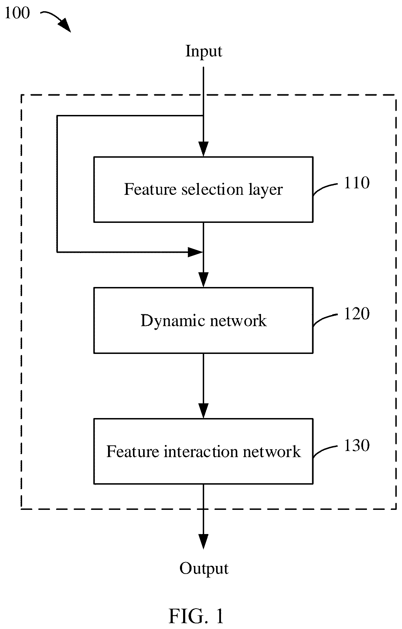

FIG. 1 is a block diagram of a neural network model 100 according to some embodiments of this disclosure. As shown in FIG. 1, the neural network model 100 includes a feature selection layer 110, a dynamic network 120, and a feature interaction network 130. The neural network model 100 may obtain an input, and correspondingly obtain an output.

In some embodiments, the input may represent a plurality of features related to a recommendation system, for example, a plurality of features associated with a user, recommended content, and the like. In some examples, the plurality of features may also be referred to as a full feature. In some embodiments, the output may represent an indicator used by the recommendation system, for example, a CTR or a CVR. For example, the output may be a numerical value, for example, represented in a form of percentage or probability.

Optionally, the feature selection layer 110 may be referred to as a domain feature selection layer, a domain feature selector, or the like. This is not limited in this disclosure. The feature selection layer 110 may be used to select one or more domain features from the full feature. For example, the domain feature is a predetermined quantity of features with a large distribution difference in the plurality of features.

Optionally, the dynamic network 120 may be referred to as a domain encoding network, a domain adaptive dynamic network, a domain feature encoding/decoding network, a domain encoding/decoding network, or the like. This is not limited in this disclosure. The domain feature may be encoded into intermediate-layer representation, and the intermediate-layer representation can be decoded into a parameter of the dynamic network 120. An embedded eigenvector corresponding to the input may be input to the dynamic network 120, to obtain a transformed converted representation.

Optionally, the feature interaction network 130 may be referred to as a domain adaptive feature interaction network, a feature interaction layer, or the like. This is not limited in this disclosure. The transformed converted representation may be input to the feature interaction network 130, to obtain the output of the neural network model 100.

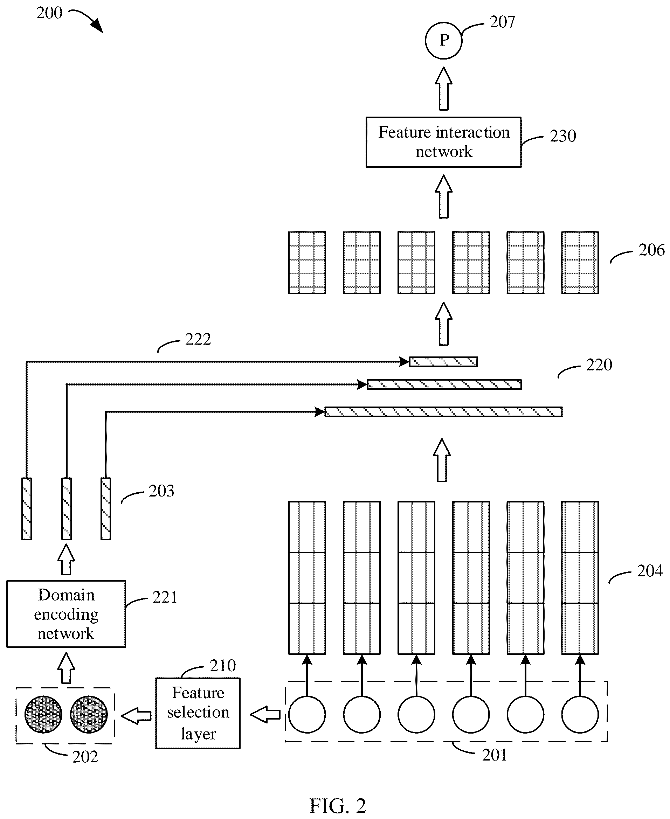

The following describes in detail the neural network model 100 in embodiments of this disclosure with reference to FIG. 2. FIG. 2 is a diagram of a model structure 200 according to some embodiments of this disclosure. As shown in FIG. 2, a model includes a feature selection layer 210, a dynamic network 220, and a feature interaction network 230. It may be understood that in some examples, the feature selection layer 210 may correspond to the feature selection layer 110 in FIG. 1, the dynamic network 220 may correspond to the dynamic network 120 in FIG. 1, and the feature interaction network 230 may correspond to the feature interaction network 130 in FIG. 1. In some examples, the dynamic network 220 together with a domain encoding network 221 and a domain decoding network 222 may correspond to the dynamic network 120 in FIG. 1, for example, the domain encoding network 221 and the domain decoding network 222 may be used to determine a dynamic network parameter of the dynamic network 220.

As shown in FIG. 2, an input may include a full feature 201. For example, the full feature 200 may include a plurality of features, for example, an environment feature, a user feature, and a commodity feature. The environment feature may include time, weather, and the like. The user feature may include a user age, a user gender, a user occupation, a city in which the user is located, and the like. The commodity feature may include a commodity category, a commodity brand, a commodity price, and the like. It may be understood that the plurality of features listed in this specification are merely examples, and a quantity included in the full feature 200 shown in FIG. 2 is merely an example. In an actual scenario, a quantity or a type of features may be more or fewer. This is not limited in this disclosure.

The full feature 201 may be input to the feature selection layer 210, to obtain a domain feature 202. Optionally, the domain feature 202 may be one or more in the full feature 201. Optionally, the domain feature 202 may be at least two in the full feature 201.

In some embodiments of this disclosure, the feature selection layer 210 may be specifically used to: determine distribution of each feature in the full feature 201, and select one or more in the full feature 201 as the domain feature 202 based on the distribution of each feature. The distribution of the feature may be determined based on statistics.

In some examples, a cross entropy of each feature may be determined based on the distribution of each feature. In this way, a plurality of cross entropies may be obtained for the plurality of features in the full feature 201. In some examples, a predetermined quantity of features with a largest cross entropy may be used as the domain feature. For example, the predetermined quantity is N0, and N0 is a positive integer. For example, the plurality of features may be sorted based on the plurality of cross entropies (for example, in descending order), and first N0 features in the sorting may be selected as N0 domain features. N0 may be a preset fixed value, for example, N0=3 or another value. N0 may be a preset integer value associated with a quantity of the plurality of features, for example, N0 is equal to a round-up or round-down value of 10% of the quantity of the plurality of features. In some other examples, features whose cross entropies are greater than (or greater than or equal to) a predetermined value may be used as domain features. For example, cross entropies that are in the plurality of cross entropies and that are greater than (or greater than or equal to) the predetermined value may be determined, and features corresponding to the cross entropies may be used as the domain features.

In some other examples, the domain feature may be selected based on frequency of each of the plurality of features. It may be understood that the domain feature may alternatively be selected in another similar manner, which is not listed one by one in this specification.

In this manner, in this embodiment of this disclosure, the feature selection layer 210 can select, from the full feature 201, a domain feature with a large distribution difference, so that a multi-domain feature can be reflected.

In some embodiments of this disclosure, the domain encoding network 221 may be specifically configured to encode the domain feature 202 into a middle-layer representation 203. In some examples, the middle-layer representation 203 may be represented as a vector having a predetermined dimension. For example, the predetermined dimension may be a fixed dimension, for example, M dimensions, where M is a positive integer. In this manner, generated semantic information and the like about the domain feature 202 can be extracted through encoding, so that the middle-layer representation 203 can reflect a difference between different domains.

In some examples, the middle-layer representation 203 may be decoded (for example, 222) into the dynamic network parameter. For example, the middle-layer representation 203 may be split into a plurality of layers, to obtain the dynamic network parameter. In this manner, the dynamic network 220 may be used for subsequent processing. Optionally, an operation performed after the dynamic network 220, for example, performed on the feature interaction network 230, may be referred to as a downstream task or of another name, or the like. This is not limited in this disclosure. It may be understood that, for the dynamic network 220, the middle-layer representation 203 may be understood as hidden state (hidden state) information of the dynamic network.

Refer to FIG. 2. A plurality of eigenvectors 204 corresponding to the plurality of features in the full feature 201 may be separately determined. For example, the plurality of eigenvectors 204 may be separately input to the dynamic network 220, to obtain a plurality of corresponding converted representations 206. In this manner, in embodiments of this disclosure, according to the dynamic network, not only a characteristic of each domain can be considered, but also a commonality of different domains can be considered, so that a network output is accurate. Optionally, the eigenvector 204 may be referred to as an embedded feature or of another name. This is not limited in this disclosure.

In some examples, the feature interaction network 230 may be implemented as an existing CTR prediction model. Because the input of the feature interaction network 230 in this embodiment of this disclosure is the converted representation 206 obtained through the dynamic network 220, use of the dynamic network 220 can enhance effect in multi-domain recommendation. It may be understood that, in this embodiment of this disclosure, the dynamic network 220 can be combined with various different model structures. In other words, the dynamic network parameter may be used as a configurable component to act on various different model structures.

In some embodiments of this disclosure, a model structure of the feature interaction network 230 may be an inner product-based model structure, for example, a DNN, a PNN, or a deep factorization machine (Deep Factorization Machine, DeepFM). As shown in FIG. 2, the converted representation 206 can be input to the feature interaction network 230 to obtain a network output 207.

In some other embodiments of this disclosure, the model structure of the feature interaction network 230 may be a transformer (Transformer)-based model structure, for example, an automatic interaction (Automatic Interaction, AutoInt) model or an interpretable through hierarchical attention (Interpretable through Hierarchical Attention, InterHAt) model. In some examples, the transformer-based model structure may include a query (Query) branch and a key (Key) branch. For example, outputs of the query branch and the key branch may be input to the dynamic network 220 to obtain the transformed representation 206. The transformed representation 206 is then input to the feature interaction network 230 (for example, an attention-based network) to obtain the model output 207. For example, the feature interaction network 230 may obtain the model output 207 based on attention coefficient calculation.

In some embodiments of this disclosure, the model output 207 may represent a CTR, for example, represented as a probability (probability, P) value. It should be understood that the model output 207 may have another meaning, and is related to an actual scenario, for example, may be a score of a commodity, a service, or the like. This is not limited in this disclosure.

It can be learned that in embodiments of this disclosure, modeling is performed based on domain-adaptive feature interaction, so that feature interaction can be learned. In this way, the model can be used to determine an accurate indicator like the CTR. The solution may be applied to various recommendation systems, and it may be understood that the recommendation system may provide accurate recommendation for the user based on an indicator like the CTR, so that the user can view content that the user is interested in, thereby improving user experience.

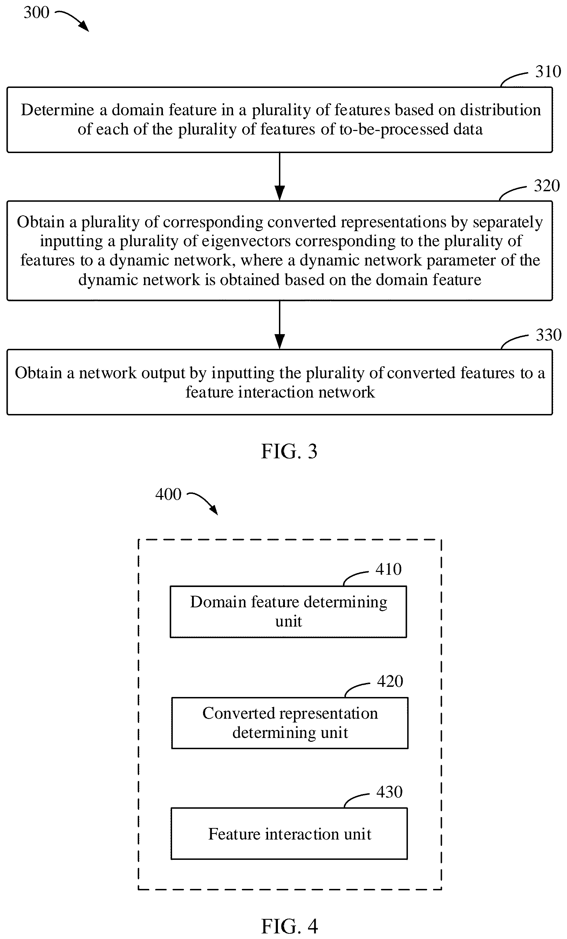

FIG. 3 is a flowchart of an example method 300 according to some embodiments of this disclosure. Block 310: Determine a domain feature in a plurality of features based on distribution of each of the plurality of features of to-be-processed data. Block 320: Obtain a plurality of corresponding converted representations by separately inputting a plurality of eigenvectors corresponding to the plurality of features to a dynamic network, where a dynamic network parameter of the dynamic network is obtained based on the domain feature. Block 330: Obtain a network output by inputting the plurality of converted features to a feature interaction network.

In some examples, the operation in block 319 may include: determining a cross entropy of each feature based on the distribution of each feature; and selecting, from the plurality of features, a predetermined quantity of features with a largest cross entropy as the domain feature.

For example, the dynamic network parameter of the dynamic network may be determined in the following manner: encoding the domain feature into a middle-layer representation; and decoding the middle-layer representation into the dynamic network parameter. Optionally, the middle-layer representation may be decomposed into a plurality of layers, to obtain the dynamic network parameter. Optionally, the middle-layer representation is represented as a vector having a predetermined dimension.

In some embodiments, a model structure of the feature interaction network is an inner product-based model structure, for example, a DNN, a PNN, or a DeepFM. Optionally, an original embedded feature may be input to the dynamic network, and an output of the dynamic network may be input to the feature interaction network.

In some other embodiments, a model structure of the feature interaction network is a transformer-based automatic interaction model structure, for example, AutoInt or InterHat. For example, the plurality of eigenvectors input to the dynamic network may include eigenvectors output by a query branch and a key branch of the automatic interaction model structure. Optionally, outputs of the query branch and the key branch may be input to the dynamic network, and an output of the dynamic network may be input to the feature interaction network, and is used, for example, for attention coefficient calculation.

The network output obtained in block 330 of the method 300 may represent a click-through rate of a user corresponding to the to-be-processed data.

For example, the method 300 may be implemented by using a neural network model used for click-through rate prediction, and the neural network model includes a feature selection layer, the dynamic network, and the feature interaction network. In addition, the neural network model may be described as above with reference to FIG. 1 and FIG. 2.

It should be understood that the solutions in this embodiment of this disclosure can be used in various recommendation systems, for example, a personalized service scenario. In an example, in a scenario in which the user interacts with commodities, the recommendation system to which the method in this embodiment of this disclosure is applied can perform modeling based on interaction history of the user, and then can sort the commodities to display the commodities to the user. For example, a network output may be a click-through rate. In this case, sorting may be performed based on predicted click-through rates. For example, the network output may be a commodity score. In this case, sorting may be performed based on predicted scores. For example, sorted first several (top N) commodities may be displayed.

In an example, an example scenario may include an application market of a smart terminal device. The application market may predict click-through rates (for example, download probabilities) of the user for a large quantity of candidate applications, and sort and display the applications based on the predicted click-through rates. For example, an application whose click-through rate is higher than a threshold is an application that the user may be interested in and may be downloaded by the user. In another example, the example scenario may include a recommendation ranking list of the smart terminal device, for example, a music ranking list, a daily recommended news ranking list, or a recommended commodity ranking list. For example, the recommendation ranking list may predict click-through rates (for example, purchase probabilities) of the user for a plurality of objects (such as music, news, and commodities), and sort and display the objects based on the predicted click-through rates.

Media data is used as an example. In an example scenario like mobile phone advertising, historical interaction data of the user may be obtained to construct a sample in each domain. For example, a sample of the user in a single domain may be represented as a dataset (X, Y), and the dataset includes a plurality of data items. For example, any one of the plurality of data items is represented as (*xᵢ*, *yᵢ*). In this case, a network model may be determined based on the solution in this embodiment of this disclosure, to be specific, modeling may be performed on multi-domain interaction of the user based on the sample of the user in each domain. Specifically, a commodity sequence may be mapped as a low-dimensional contiguous representation vector through an embedding layer. Then, the low-dimensional contiguous representation vector (a low-dimensional representation sequence) of the commodity is used as an input of the model, and is processed by the feature selection layer, the dynamic network, and the feature interaction network to obtain a next predicted click-through rate of the user for a potential interactive commodity.

Table 1 shows an example result of effect of using the solution in this embodiment of this disclosure. Specifically, performance evaluation is performed on a specific dataset in a multi-behavior sequence recommendation task. As shown in Table 1, an area under a curve (Area Under a Curve, AUC) obtained by using a baseline model is 0.8353, and an AUC that can be reached on a basis of the baseline model by applying the solution in this embodiment of this disclosure is 0.8409. It can be learned that, in terms of recommendation precision, the solution in this embodiment of this disclosure is significantly improved compared with that in the baseline model, thereby illustrating effectiveness of this solution.

**Table 1**

| **Model** | **AUC** |
|---|---|
| Baseline model | 0.8353 |
| Baseline model + this solution | 0.8409 |

It can be learned that, in this embodiment of this disclosure, the dynamic network parameter can be determined based on the domain feature, and the plurality of converted features output by the dynamic network are then input to the feature interaction network. In this way, feature interaction between different domains can be considered in combination with commonalities and characteristics of a plurality of domains corresponding to the plurality of features, so that the network output is accurate.

It should be further understood that division into the manners, cases, categories, and embodiments in embodiments of this application is merely for ease of description, and should not constitute a particular limitation. Features in the manners, categories, cases, and embodiments may be combined with each other provided that the features are logical.

It should be further understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained after such a modification, change, or combination also falls within the scope of embodiments of this application.

It should be further understood that the foregoing content descriptions focus on differences between embodiments. For same or similar parts, refer to each other. For brevity, details are not described herein again.

FIG. 4 is a block diagram of an example apparatus 400 according to an example embodiment of this disclosure. The apparatus 400 may be implemented by using software, hardware, or a combination thereof. As shown in the figure, the apparatus 400 includes a domain feature determining unit 410, a converted feature determining unit 420, and a feature interaction unit 430.

The domain feature determining unit 410 is configured to determine a domain feature in a plurality of features based on distribution of each of the plurality of features of to-be-processed data. The converted feature determining unit 420 is configured to obtain a plurality of corresponding converted representations by separately inputting a plurality of eigenvectors corresponding to the plurality of features to a dynamic network, where a dynamic network parameter of the dynamic network is obtained based on the domain feature. The feature interaction unit 430 is configured to obtain a network output by inputting the plurality of converted features to a feature interaction network.

In some implementations of this disclosure, the domain feature determining unit 410 may be specifically configured to: determine a cross entropy of each feature based on the distribution of each feature; and select, from the plurality of features, a predetermined quantity of features with a largest cross entropy as the domain feature.

In some embodiments, the apparatus 400 may further include: an encoding unit, configured to encode the domain feature into a middle-layer representation; and a decoding unit, configured to decode the middle-layer representation into the dynamic network parameter. For example, the decoding unit may be specifically configured to decompose the middle-layer representation into a plurality of layers, to obtain the dynamic network parameter. Optionally, the middle-layer representation is represented as a vector having a predetermined dimension.

For example, a model structure of the feature interaction network is an inner product-based model structure.

For example, a model structure of the feature interaction network is a transformer-based automatic interaction model structure, and the plurality of eigenvectors input to the dynamic network include eigenvectors output by a query branch and a key branch of the automatic interaction model structure.

In some implementations of this disclosure, the network output indicates a click-through rate of a user corresponding to the to-be-processed data.

The apparatus 400 in FIG. 4 can be configured to implement the processes described with reference to FIG. 1 to FIG. 3. For brevity, details are not described herein again. For example, a neural network model used for click-through rate prediction may be installed on the apparatus 400, and the neural network model includes a feature selection layer, the dynamic network, and the feature interaction network.

Division into the modules or the units in this embodiment of this disclosure is an example, is merely logical function division, and may be other division during actual implementation. In addition, functional units in the disclosed embodiment may be integrated into one unit, each of the units may exist alone physically, or two or more units may be integrated into one unit. The integrated unit may be implemented in a form of hardware, or may be implemented in a form of software functional unit. For example, the domain feature determining unit 410, the converted feature determining unit 420, and the feature interaction unit 430 in FIG. 4 may respectively correspond to the feature selection layer 110, the dynamic network 120, and the feature interaction network 130 described with reference to FIG. 1. It may be understood that the units in FIG. 4 may be implemented by using software, or may be implemented by using hardware.

As an example of a software functional unit, each unit in FIG. 4 may include code running on a computing instance. The computing instance may include at least one of a physical host (computing device), a virtual machine, and a container. Further, there may be one or more computing instances. For example, the units in FIG. 4 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs. Similarly, the plurality of hosts/virtual machines/containers configured to run the code may be distributed in a same virtual private cloud (virtual private cloud, VPC), or may be distributed in a plurality of VPCs. Generally, one VPC is disposed in one region. For inter-region communication between different VPCs in a same region and between different VPCs in different regions, a communication gateway needs to be disposed in each VPC, and interconnection between different VPCs is implemented by using the communication gateway.

Each unit in FIG. 4 is used as an example of a hardware function unit, and may include at least one computing device, for example, a server. Alternatively, each unit in FIG. 4 may be a device or the like implemented by using an application-specific integrated circuit (application-specific integrated circuit, ASIC), or a programmable logic device (programmable logic device, PLD). The PLD may be implemented by a complex programmable logic device (complex programmable logical device, CPLD), a field-programmable gate array (field-programmable gate array, FPGA), generic array logic (generic array logic, GAL), or any combination thereof.

A plurality of computing devices included in each unit in FIG. 4 may be distributed in a same region, or may be distributed in different regions. The plurality of computing devices included in each unit in FIG. 4 may be distributed in a same AZ, or may be distributed in different AZs. Similarly, the plurality of computing devices included in each unit in FIG. 4 may be distributed in a same VPC, or may be distributed in a plurality of VPCs. The plurality of computing devices included in each unit in FIG. 4 may be any combination of computing devices such as a server, an ASIC, a PLD, a CPLD, an FPGA, and a GAL.

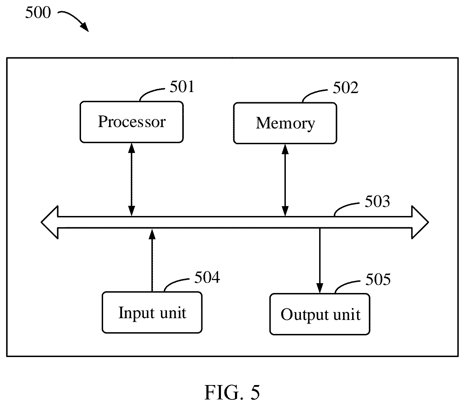

FIG. 5 is a block diagram of an example device 500 that may be used to implement an embodiment of this disclosure. For example, the device 500 in FIG. 5 may be implemented as a computing device, or may be implemented as a chip or a chip system in a computing device. This is not limited in this embodiment of this disclosure.

As shown in the figure, the device 500 includes a processor 501 and a memory 502.

The memory 502 may store computer program instructions, and may further store various programs and data required for an operation of the device 500. The processor 501 and the memory 502 are connected to each other through a bus 503.

The processor 501 may include a central processing unit (Central Processing Unit, CPU), and the CPU may perform various proper actions and processing based on the computer program instructions stored in the memory 502. The memory 502 may include, for example, a read-only memory (Read-Only Memory, ROM), a random access memory (Random Access Memory, RAM), and a storage unit like a magnetic disk or an optical disc.

The device 500 may further include an input unit 504 and an output unit 505, for example, may be connected to the bus 503 through an input/output (Input/Output, I/O) interface. The input unit 504 may include, for example, a keyboard and a mouse. The output unit 505 may include, for example, various types of displays and speakers. The device 500 may further include a communication unit (not shown in the figure). The communication unit may allow the device 500 to exchange information/data with another device through a computer network, for example, the Internet, and/or various telecommunication networks.

The CPU may be any general-purpose and/or dedicated processing component having processing and computing capabilities. Some examples that may be implemented include but are not limited to a graphics processing unit (Graphics Processing Unit, GPU), any dedicated artificial intelligence (Artificial Intelligence, AI) computing chip, any computing unit that runs a machine learning model algorithm, a digital signal processor (Digital Signal Processor, DSP), and any proper processor, controller, microcontroller, and the like. Correspondingly, the CPU may be referred to as a computing unit. The CPU performs the methods and processing described above. For example, in some embodiments, the processes described above may be implemented as a computer software program, and the computer software program is tangibly included in a computer-readable medium. In some embodiments, some or all of the computer program may be loaded and/or installed onto the device 500 by using the RAM and/or ROM and/or the communication unit. When the computer program is loaded to the ROM and/or the RAM and executed by the CPU, one or more steps of the process described above may be performed. Alternatively, in another embodiment, the CPU may be configured to perform the processes described above in any other proper manner (for example, by using firmware).

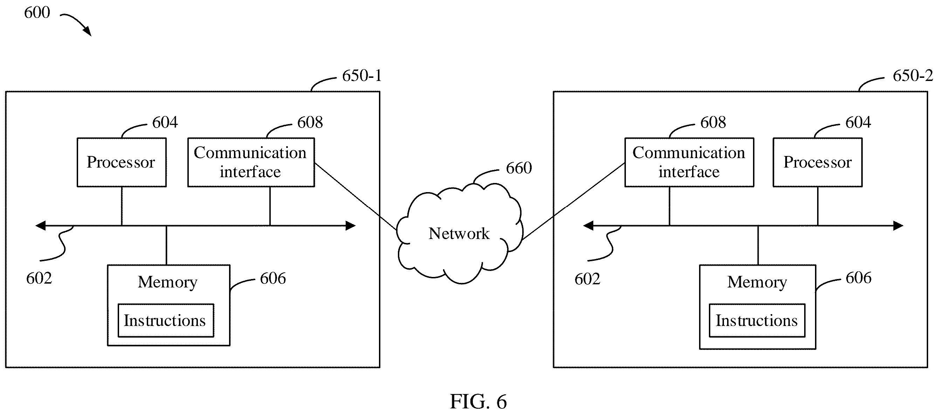

FIG. 6 is a block diagram of an example computing device cluster 600 that may be used to implement an embodiment of this disclosure. As shown in FIG. 6, the computing device cluster 600 includes at least one computing device, for example, a computing device 650-1 and a computing device 650-2 (collectively referred to as a computing device 650) shown in FIG. 6.

The computing device 650 may be a server, for example, a central server, an edge server, or a local server in a local data center. In some embodiments, the computing device 650 may alternatively be a terminal device like a desktop computer, a notebook computer, or a smartphone. As shown in the figure, the computing device 650 includes a processor 604, a memory 606, and a communication interface 608 that are connected through a bus 602. In some examples, the computing device 650 may be implemented as the device 500 shown in FIG. 5.

One or more computing devices 650 in the computing device cluster 600 may be connected through a network. The network may be a wide area network, a local area network, or the like. As shown in FIG. 6, the computing device 650-1 and the computing device 650-2 are connected through a network 660. Specifically, different computing devices 650 are connected to the network 660 through respective communication interfaces 608.

In some possible implementations, memories 606 in the one or more computing devices 650 in the computing device cluster 600 may store same instructions, to perform the methods described with reference to FIG. 1 to FIG. 3. For example, a single computing device 650 may implement the methods described above with reference to FIG. 1 to FIG. 3. For example, a combination of a plurality of computing devices may jointly perform the methods described above with reference to FIG. 1 to FIG. 3. For example, one computing device performs a process of training the neural network model, and another computing device performs an inference process by using the trained neural network model.

It should be noted that the memories 606 in different computing devices 650 in the computing device cluster 600 may store different instructions, and different instructions are separately used to perform some functions of the apparatus 400. In other words, the instructions stored in the memories 606 in different computing devices 650 may separately implement functions of one or more of the units in FIG. 4.

It should be noted that, although two computing devices: the computing device 650-1 and the computing device 650-2 are shown in FIG. 6, it may be understood that, during specific implementation, only one computing device may implement the method in embodiments of this disclosure, and two or more computing devices may jointly implement the method in embodiments of this disclosure. This is not limited in this disclosure.

An embodiment of this disclosure further provides a chip. The chip may include an input interface, an output interface, and a processing circuit. In embodiments of this disclosure, the input interface and the output interface may complete signaling or data exchange, and the processing circuit may complete generation and processing of the signaling or the data information.

An embodiment of this disclosure further provides a chip system, including a processor, configured to support a computing device to implement functions in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this disclosure further provides a processor, configured to be coupled to a memory. The memory stores instructions. When the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of program modules may be combined or split between the program modules as required. Machine-executable instructions for the program module may be executed locally or in a distributed device. In the distributed device, the program module may be located in both local and remote storage media.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of computer-readable storage medium include an electrical connection with one or more wires, a portable computer disk, a hard disk, a random access memory (RAM), a read-only memory (ROM), an erasable programmable read-only memory (Erasable Programmable Read-Only Memory, EPROM), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the shown operations need to be performed to achieve desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

Various implementations of this disclosure have been described above. The foregoing descriptions are example descriptions rather than exhaustive descriptions, and are not limited to the disclosed implementations. Many modifications and changes are apparent to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A data processing method, comprising:
determining a domain feature in a plurality of features based on distribution of each of the plurality of features of to-be-processed data;
obtaining a plurality of corresponding converted representations by separately inputting a plurality of eigenvectors corresponding to the plurality of features to a dynamic network, wherein a dynamic network parameter of the dynamic network is obtained based on the domain feature; and
obtaining a network output by inputting the plurality of converted features to a feature interaction network.

2. The method according to claim 1, wherein the determining a domain feature in a plurality of features comprises:
determining a cross entropy of each feature based on the distribution of each feature; and
selecting, from the plurality of features, a predetermined quantity of features with a largest cross entropy as the domain feature.

3. The method according to claim 1 or 2, further comprising:
encoding the domain feature into a middle-layer representation; and
decoding the middle-layer representation into the dynamic network parameter.

4. The method according to claim 3, wherein the decoding the middle-layer representation into the dynamic network parameter comprises:
decomposing the middle-layer representation into a plurality of layers, to obtain the dynamic network parameter.

5. The method according to claim 3 or 4, wherein the middle-layer representation is represented as a vector having a predetermined dimension.

6. The method according to any one of claims 1 to 5, wherein a model structure of the feature interaction network is an inner product-based model structure.

7. The method according to any one of claims 1 to 5, wherein a model structure of the feature interaction network is a transformer-based automatic interaction model structure, and the plurality of eigenvectors input to the dynamic network comprise eigenvectors output by a query branch and a key branch of the automatic interaction model structure.

8. The method according to any one of claims 1 to 7, wherein the network output indicates a click-through rate of a user corresponding to the to-be-processed data.

9. The method according to any one of claims 1 to 8, wherein the method is implemented by using a neural network model used for click-through rate prediction, and the neural network model comprises a feature selection layer, the dynamic network, and the feature interaction network.

10. A data processing apparatus, comprising:
a domain feature determining unit, configured to determine a domain feature in a plurality of features based on distribution of each of the plurality of features of to-be-processed data;
a converted feature determining unit, configured to obtain a plurality of corresponding converted representations by separately inputting a plurality of eigenvectors corresponding to the plurality of features to a dynamic network, wherein a dynamic network parameter of the dynamic network is obtained based on the domain feature; and
a feature interaction unit, configured to obtain a network output by inputting the plurality of converted features to a feature interaction network.

11. The apparatus according to claim 10, wherein the domain feature determining unit is specifically configured to:
determine a cross entropy of each feature based on the distribution of each feature; and
select, from the plurality of features, a predetermined quantity of features with a largest cross entropy as the domain feature.

12. The apparatus according to claim 10 or 11, wherein the apparatus further comprises:
an encoding unit, configured to encode the domain feature into a middle-layer representation; and
a decoding unit, configured to decode the middle-layer representation into the dynamic network parameter.

13. The apparatus according to claim 12, wherein the decoding unit is specifically configured to:
decompose the middle-layer representation into a plurality of layers, to obtain the dynamic network parameter.

14. The apparatus according to claim 12 or 13, wherein the middle-layer representation is represented as a vector having a predetermined dimension.

15. The apparatus according to any one of claims 10 to 14, wherein a model structure of the feature interaction network is an inner product-based model structure.

16. The apparatus according to any one of claims 10 to 14, wherein a model structure of the feature interaction network is a transformer-based automatic interaction model structure, and the plurality of eigenvectors input to the dynamic network comprise eigenvectors output by a query branch and a key branch of the automatic interaction model structure.

17. The apparatus according to any one of claims 10 to 16, wherein the network output indicates a click-through rate of a user corresponding to the to-be-processed data.

18. The apparatus according to any one of claims 10 to 17, wherein a neural network model used for click-through rate prediction is installed on the apparatus, and the neural network model comprises a feature selection layer, the dynamic network, and the feature interaction network.

19. A computer-readable storage medium, wherein the computer-readable storage medium stores computer-executable instructions, and when the computer-executable instructions are executed by a processor, the method according to any one of claims 1 to 9 is implemented.
